Europäisches Patentamt

European Patent Office

Office européen des brevets

(11) Veröffentlichungsnummer: **0 377 863**
**A1**

(12) **EUROPÄISCHE PATENTANMELDUNG**

(21) Anmeldenummer: **89123332.2**

(22) Anmeldetag: **16.12.89**

(51) Int. Cl.⁵: **E06B 1/36, E06B 3/68**

(30) Priorität: **12.01.89 DE 3900669**

(43) Veröffentlichungstag der Anmeldung:
**18.07.90 Patentblatt 90/29**

(84) Benannte Vertragsstaaten:
**AT BE CH FR GB LI LU NL**

(71) Anmelder: **BEMOFENSTERBAU GMBH**
**Kärlicher Strasse**
**D-5452 Weissenthurm(DE)**

(72) Erfinder: **Kurz, Rolf**
**Waldstrasse 1**
**D-5451 Melsbach(DE)**
Erfinder: **Biehl, Reiner**
**Michaelstrasse 12**
**D-5450 Neuwied 12(DE)**

(74) Vertreter: **Grommes, Karl F., Dr.**
**Mehlstrasse 14-16**
**D-5400 Koblenz(DE)**

(54) **Montagefenster.**

(57) Zur Vermeidung eines Abgleitens oder Abrutschens der tragenden Verbindungsstücke ( 12 ) sollen die Hammerkopfschrauben ( 11 ) an der Innenseite des Kopfes ( 25 ) mindestens ein kurzes Eindringteil ( 22 ) in Form einer Spitze, eines Zahns, einer Schneide o.ä. aufweisen. Als besonders wirksam erweisen sich längliche, radial ausgerichtete Schneiden. Diese Eindringteile ( 22 ) pressen sich beim Anziehen der Hammerkopfschraube ( 11 ) beidseits der Nut der Ankerschiene ( 10 ) in die Innenfläche ( 23 ) der zur Befestigung vorgesehenen Ränder oder Flanken der Ankerschiene ( 10 ).

Fig. 2

EP 0 377 863 A1

## Technisches Gebiet

Die Erfindung betrifft ein Montagefenster aus vertikalen und horizontalen Sprossen aus Beton sowie ggf. einer Fensterbank aus Beton mit jeweils einer in den Betonkörper eingelassenen Ankerschiene, wobei die Ankerschiene an der den Glasscheiben zugewandten Seite eine offene Nut bildet und die Sprossen mit Verbindungsstücken aus Metall und in die Nut eingreifenden Hammerkopfschrauben verbunden sind.

## Stand der Technik

Ein solches Montagefenster ist durch die DE-OS 35 17 249 bekannt. Es ermöglicht eine recht einfache und zweckmäßige Bauweise. Die Last der Glasscheiben wird dabei direkt auf die tragfähigsten Bauteile, nämlich die vertikalen Sprossen übertragen. Die in die Betonkörper eingelassenen Ankerschienen bieten den Verbindungsstücken und deren Befestigungsmittlen in aller Regel den notwendigen Halt. Dazu ist allerdings erforderlich, daß die Befestigungsmittel stramm an die zur Befestigung vorgesehenen Ränder oder Flanken der Ankerschiene angepreßt werden, um einen ausreichenden Reibungswiderstand gegen ein Abgleiten zu erzeugen.

Die bei der Montage eingestellten Verhältnisse können sich allerdings wieder ändern. So läßt bereits der natürliche Alterungsprozeß das Material ermüden. Höhere Temperaturen führen zur Dehnung und damit Lockerung einer Preßverbindung. Insbesondere aber das Bestreben, aus den verschiedensten Gründen (Komfort, Energieersparnis, Sicherheit etc.) immer schwerere Glasscheiben zu verwenden, kann die bekannten Preßverbindungen unter Umständen in kritische Bereiche führen. Dabei ist die besprochene Bauweise grundsätzlich auch für Brandschutzzwecke sehr geeignet.

## Darstellung der Erfindung

Der Erfindung liegt die Aufgabe zugrunde, ein Montagefenster der eingangs genannten Art so weiterzubilden, daß dieses auch unter der Last schwerer Glasscheiben und unter der Einwirkung hoher Temperaturen wie im Brandfalle über längere Zeit sicher verbunden bleibt.

Diese Aufgabe wird erfindungsgemäß dadurch gelöst, daß die Hammerkopfschrauben an der Innenseite des Kopfes mindestens ein kurzes Eindringteil in Form einer Spitze, eines Zahnes, einer Schneide o.ä. aufweisen.

Vorteilhaft sind zwei diametral zueinander angeordnete Eindringteile vorgesehen.

Als besonders wirkungsvoll und sicher erweisen sich Ausführungsformen, bei denen die Eindringteile längliche, radial ausgerichtete Schneiden sind.

Nach einem weiteren Vorschlag weist das Verbindungsstück eine Auflager- und/oder Begrenzungsfläche für die einzusetzende Glasscheibe auf.

## Kurze Beschreibung der Zeichnung

Nachfolgend wird anhand der Zeichnung ein bevorzugtes Ausführungsbeispiel beschrieben. Darin zeigen:

Fig. 1 ein an einer vertikalen Sprosse befestigtes Verbindungsstück in Draufsicht,

Fig. 2 den Gegenstand von Fig. 1 im Schnitt entlang der Linie II - II und

Fig. 3a-c eine Hammerkopfschraube, jedoch ohne Mutter, in zwei verschiedenen Seitenansichten sowie Unteransicht.

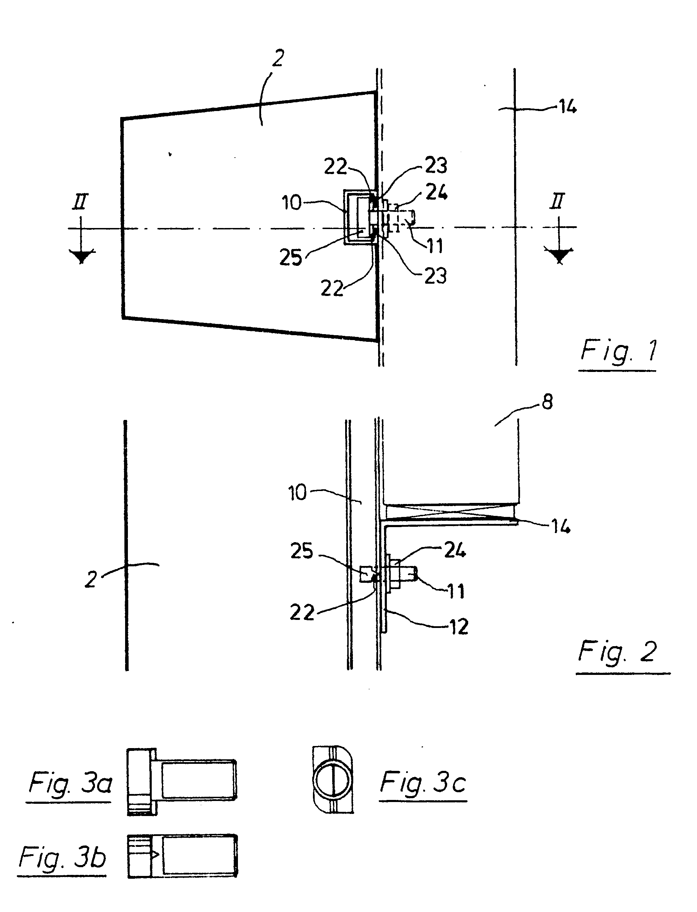

Nach den Fig. 1 und 2 ist in eine vertikale Sprosse 2 aus Beton an der einer Glasscheibe 8 zugewandten Seite eine Ankerschiene 10 eingelassen. In diese Ankerschiene 10 greift eine Anker- oder Hammerkopfschraube 11 als Befestigungsmittel für ein Verbindungsstück 12 ein. Letzteres weist eine Aufkantung 14 auf, die als Auflager für die Glasscheibe 8 dient.

Wie ersichtlich, kommt die Befestigung des Verbindungsstückes 12 an der vertikalen Sprosse 2 mittels einer Schraubverbindung zustande. Diese erzeugt in jedem Falle einen gewissen Anpreßdruck, wobei die gewünschte Lage erfindungsgemäß durch eine kleine lokale Verformung gesichert wird. Wenn nämlich die Hammerkopfschraube 11 angezogen wird, preßt sich beidseits der Nut der Ankerschiene 10 ein Eindringteil 22 in die Innenfläche 23 der zur Befestigung vorgesehenen Ränder oder Flanken der Ankerschiene 10. Somit lassen sich hier mit Mutter 24 der Hammerkopfschraube 11 sowie deren Kopf 25 samt Eindringteil 22 an dessen Innen- oder Unterseite nicht nur ein geeigneter Anpreßdruck erzeugen, sondern auch ein gewisser Formschluß, welcher einem unerwünschten Abrutschen oder Abgleiten erfolgreich entgegenwirkt.

Das Eindringteil 22 hat - wie insbesondere die Fig. 3a-c verdeutlichen - im vorliegenden Ausführungsbeispiel die Form von zwei länglichen, spitzen Zähnen, welche diametral angeordnet und radial ausgerichtet sind. Mit ihrer Hilfe läßt sich eine sehr wirksame Verzahnung mit der Ankerschiene 10 erreichen. So haben Versuche mit jener Ausführungsform ergeben, daß auch bei einem allmählichen Nachlassen des Anpreßdruckes um 25 % noch die volle Tragfähigkeit des Glasauflagers erhalten bleibt. Damit erweist sich das erfindungsgemäße Verbindungsstück auch für Brandschutzverglasungen mit ihrem hohen Eigengewicht als sehr geeignet.

**Ansprüche**

1. Montagefenster aus vertikalen und horizontalen Sprossen aus Beton sowie ggf. einer Fensterbank aus Beton mit jeweils einer in den Betonkörper eingelassenen Ankerschiene, wobei die Ankerschiene an der den Glasscheiben zugewandten Seite eine offene Nut bildet und die Sprossen mit Verbindungsstücken aus Metall und in die Nut eingreifenden Hammerkopfschrauben verbunden sind, dadurch gekennzeichnet, daß die Hammerkopfschrauben ( 11 ) an der Innenseite des Kopfes ( 25 ) min destens ein kurzes Eindringteil ( 22 ) in Form einer Spitze, eines Zahnes, einer Schneide o.ä. aufweisen.

2. Montagefenster nach Anspruch 1, dadurch gekennzeichnet, daß zwei diametral zueinander angeordnete Eindringteile ( 22 ) vorgesehen sind.

3. Montagefenster nach Anspruch 1 oder 2, dadurch gekennzeichnet daß die Eindringteile ( 22 ) längliche, radial ausgerichtete Schneiden sind.

4. Montagefenster nach einem der Ansprüche 1 bis 3, dadurch gekennzeichnet, daß das Verbindungsstück ( 12 ) eine Auflager- und/oder Begrenzungsfläche für die einzusetzende Glasscheibe aufweist.

*Fig. 1*

*Fig. 2*

*Fig. 3a*

*Fig. 3b*

*Fig. 3c*

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,Y | DE-A-3 517 249 (KURZ)<br>* Ansprüche 1,2,3-6; Figur 1 *<br>--- | 1-4 | E 06 B 1/36<br>E 06 B 3/68 |
| Y | DE-U-8 523 526 (DEUTSCHE KAHNEISEN)<br>* Seite 4, Zeilen 3-16; Figuren 1-3 *<br>--- | 1-4 | |
| A | FR-A-2 132 645 (GOURNELLE)<br>* Seite 2, Zeile 10 - Seite 3, Zeile 28; Figuren 1-12 *<br>--- | 1-4 | |
| A | US-A-3 557 857 (SWENSON)<br>* Spalte 2, Zeilen 49-73; Spalte 3, Zeilen 46-57; Figuren 1-6 *<br>----- | 1 | |

**RECHERCHIERTE SACHGEBIETE (Int. Cl.5)**

E 06 B
F 16 B

Der vorliegende Recherchenbericht wurde für alle Patentansprüche erstellt

| Recherchenort | Abschlußdatum der Recherche | Prüfer |
|---|---|---|
| DEN HAAG | 11-04-1990 | DEPOORTER F. |